# EUROPEAN PATENT SPECIFICATION

(11) **EP 2 944 461 B1**
(45) Date of publication and mention of the grant of the patent: **17.03.2021**
(21) Application number: 14168680.8
(22) Date of filing: 16.05.2014
(51) Int. Cl.: B32B 21/13, B32B 21/14, B32B 7/12, B27D 1/04

(54) **METHOD FOR MAKING A PANEL OF LAMINATED VENEER LUMBER AND/OR LAMINATED VENEER BOARD FOR OUTDOOR USAGE**
VERFAHREN ZUR HERSTELLUNG EINES LAMINIERTEN FURNIERSCHICHTHOLZ UND/ODER EINER LAMINIERTEN FURNIERPLATTE FÜR AUSSENGEBRAUCH
PROCÉDÉ DE FABRICATION D'UN PANNEAU DE BOIS D'UVRE DE PLACAGE STRATIFIÉ ET/OU PANNEAU DE PLACAGE STRATIFIÉ POUR UNE UTILISATION EN EXTÉRIEUR

(43) Date of publication of application: 18.11.2015
(73) Proprietor: Samko Timber Limited, 199591 Singapore (SG)
(72) Inventor: Sunarko, Aris, 199591 Singapore (SG)
(74) Representative: Gill Jennings & Every LLP

(56) References cited:
- FR-A1- 2 585 285
- US-A- 5 040 582
- US-A1- 2005 257 888
- "Phenolharze", , Retrieved from the Internet: URL:https://roempp.thieme.de/roempp4.0/do/ data/RD-16-01590 [retrieved on 2019-03-12]

## Description

### FIELD OF INVENTION

This invention relates to a method of producing laminated veneer lumber (LVL) and laminated veneer board (LVB) panels using more than one wood species arranged in a specific manner. Further, the LVL and LVB panels are having a treatment methodology so that it can be used for outdoor usage.

### BACKGROUND OF INVENTION

Traditionally, solid sawn timber wood is used for wood applications in the outdoors. Tropical hardwood, such as Ipe (Handroanthus spp), Bangkirai (Shorea spp), Teak (Tectona Grandis), Keruing (Dipterocarpus spp), and Kapur (Dryobalanops spp), are the most common timber species being used in outdoor applications. The wood is sawn from the logs to the desired dimension before they are applied to a wide range of outdoor uses.

Due to the decreasing size of tropical hardwood forests, there is an increasing use of laminated veneer lumber (LVL) and laminated veneer board (LVB) to replace the use of solid wood, particularly in the construction industry.

Laminated veneer lumber (LVL) and laminated veneer board (LVB) is a pile of layers or plies of wood veneer bonded one veneer layer to the next by an adhesive. Laminated veneer lumber (LVL) and laminated veneer board (LVB) have been developed for structural applications due to their higher stress design values than solid wood.

LVL and LVB are traditionally either produced from a single species of wood or from the same group of species. LVL and LVB for structural applications are exclusively made from softwoods.

LVL made from softwoods is well documented in the prior art. In 1944, R. F. Luxford showed that Sitka Spruce laminated veneer products had strength properties equal to solid wood material. A LVL made from spruce veneer and known in the trade as Master Plank* is sold by Gang-Nail Systems Inc. in the U.S. They also sell LVL known as Gang-Lam made from Southern Yellow Pine veneers. A Spruce LVL has been produced in Finland since 1981 and known in the trade under the name Kertopuu. All of these LVL's are made from softwoods, i.e., Spruce, Pine or Douglas Fir.

However, many hardwoods are superior to softwoods in terms of strength, toughness, hardness, abrasion resistance, and look, and thus superior LVL and LVB could be produced from many hardwoods. This superiority could help to make LVL and LVB durable for outdoor uses, where mixing softwoods which are widely available and maximizing hardwoods with their own superiority.

Accordingly, in order to increase the strength and stability of LVL and LVB, veneers with different wood species and the arrangement of the veneer layers relative to one another to make LVL and LVB from mixed wood species have been developed, for similar purposes.

U.S. Pat. No. 5,040,582, issued August 20, 1991 to W. Ernest Hsu , describes multi species laminated veneer lumber having a particular lay-ups of the veneers and the veneers being of at least two different wood species.
French Patent FR-2585285 describes a process for forming a laminated wooden panel comprising a core of a first wood species and two outer layers of a second wood species, the layers being bonded by a thermosetting resorcinol formaldehyde adhesive.

However, despite its higher stress design values than solid wood, it is not common to use LVL or LVB concepts for outdoor usage due to perceived low durability for outdoor usage.

LVL and LVB can have large dimensional changes and cracks when it is subjected to even minor moisture and/or environmental changes. These kind of changes can be more severe in the outdoors, where water, temperature, and humidity are constantly changing, thus challenging the possibility of using LVL or LVB for outdoor uses.

One of the methods to improve the stability and durability of LVL and LVB is impregnation. This involves the introduction of chemical substances into the wood in order to improve its characteristics and impart new properties. Impregnation stabilizes dimensions, increases strength, increases resistance to water, moisture, and chemicals, and reduces cracking.

Most impregnation is done directly to a wood lumber via a high pressure process. Although theoretically simple, this process presents some difficulties, such as structural collapse, splitting of the wood, and also ensuring the required transport of actives through the wood.

When applying the impregnation concept to an LVL and/or LVB structure, the impregnation has to be performed at veneer level, i.e. the chemical should be introduced to each individual veneer which is to form the LVL or LVB. To get the same impregnation degree in each veneer, impregnation can only be applied to dry veneer. However, this causes a dry veneer to become a wet veneer. A wet, thin veneer faces handling and transporting difficulties. Wet and thin veneers are more vulnerable to cracking and splitting during handling and transporting. In addition, drying impregnated veneer would typically require an expensive process to ensure impregnated veneers reach the desired moisture content.

Impregnated veneers have higher density and contain chemical substances in order to improve its characteristics and impart new properties. As a result, impregnated veneers can have different bonding features when they are tried to be bonded one to the next. Failure in setting the right glue parameters to ensure a good bonding between veneers can result in delamination of the LVL and LVB.

### SUMMARY OF INVENTION

A primary object of the invention is to provide a method of producing a panel of LVL and/or LVB from at least more than one wood species for use in outdoor applications.

Another object of the present invention is to provide a method of producing a panel of LVL and/or LVB made from a combination of low density and high density woods that has improved durability and stability, by applying the appropriate impregnation and drying process to ensure impregnated veneer reach the desired strength.

Another object of the present invention is to provide a panel of impregnated LVL and/or LVB having appropriate bonding between layers.

A still further object of the present invention is to minimize the stresses between impregnated veneer layers of different species.

In accordance with this invention, a method of producing a panel of laminated veneer lumber and/or laminated veneer board for outdoor usage is defined in claim 1. The veneers are impregnated with a low molecular weight phenol. An adhesive is provided between adjacent veneer sheets.

All veneers are impregnated using low molecular weight phenol under a high vacuum. High vacuum can evacuate porosity and starch within each veneer.

The impregnated veneer is then dried using a direct heating methodology via hot steel platen. Each steel platen comprises grooves to ensure liquid vaporizes out of the veneer without ruining the veneer. The veneers are dried to achieve the desired moisture content. The moisture content will depend on the wood species selected to form the veneers. It is preferred that the veneers are dried to reach a moisture content of about 4% (v/w) or less.

The dried veneer is joined to another veneer using an adhesive to form a multi-layer panel by hot pressing. An adhesive is added to each dried impregnated veneer.

In one embodiment the impregnated veneers are joined together to form a laminate with a front face veneer, at least two core veneers one having a long grain direction and one having a cross grain direction, and a back face veneer.

Further, according to this invention, the multi layers panel comprise layer of veneers that have more than one wood species and the multi layers panel comprises at least two layers. The wood species used in LVL and LVB panels are selected from low density woods, such as softwoods, and high density woods, such as hardwoods.

In one embodiment the multi-layer panel comprises at least two layers from high density woods and two layers from low density woods. Preferably the high density wood layers provide at least the front face and back face veneers. The low density wood layers can provide the core veneer layers. In a further embodiment it is preferred that the panel comprises at least two veneer layers laid in the cross grain direction. The panels of LVL and LVB according to this invention are able to be used in a wide range of wood applications for outdoor usage. Outdoor uses include decking and the use of wood materials for wall cladding, fencing, garden furniture, automotive body and floor beds, wooden palette, beams, etc.

A further aspect of the invention comprises a method of producing a panel of laminated veneer lumber and/or laminated veneer board for outdoor usage comprising:
providing a plurality of veneers having a tight face and loose face;
impregnating the veneers with a low molecular weight phenol in a high pressure vacuum;
drying the impregnated veneers using direct heating with a hot grooved steel platen;
joining the dried veneers together by providing an adhesive between adjacent veneers and hot pressing the veneers, to form a multiple layer panel.

The low molecular weight phenol can be premixed with a combined anti fungus and insect repellant before the composition is used to impregnate the veneers.

Drying the impregnated veneers can occur under temperatures of below 100°C until the moisture content reaches 4% (v/w) or less.

The method can be used to prepare an LVL or LVB as described above.

A further aspect of the invention comprises a panel of laminated veneer lumber and/or laminated veneer board produced according to the method described above.

### BRIEF DESCRIPTION OF THE DRAWINGS

The invention is illustrated by way of example in the accompanying drawings wherein:
FIG. 1 is a schematic cross sectional view of a LVB panel of different wood species according to the present invention, wherein the veneers of the panel are laid in a cross grain (C) or long grain (L) direction.
FIG. 2 is a schematic cross sectional view of a LVB panel of different wood species according to the present invention, wherein the veneers of the panel are laid in a cross grain (C) or long grain (L) direction.
FIG. 3 is a schematic cross sectional view of a LVL panel of different wood species according to the present invention, wherein the veneers of the panel are laid in a long grain (L) direction.
FIG. 4 is a schematic cross sectional view of a LVL panel of different wood species according to the present invention, wherein the veneers of the panel are laid in a long grain (L) direction.

### DETAILED DESCRIPTION OF PREFERRED EMBODIMENTS

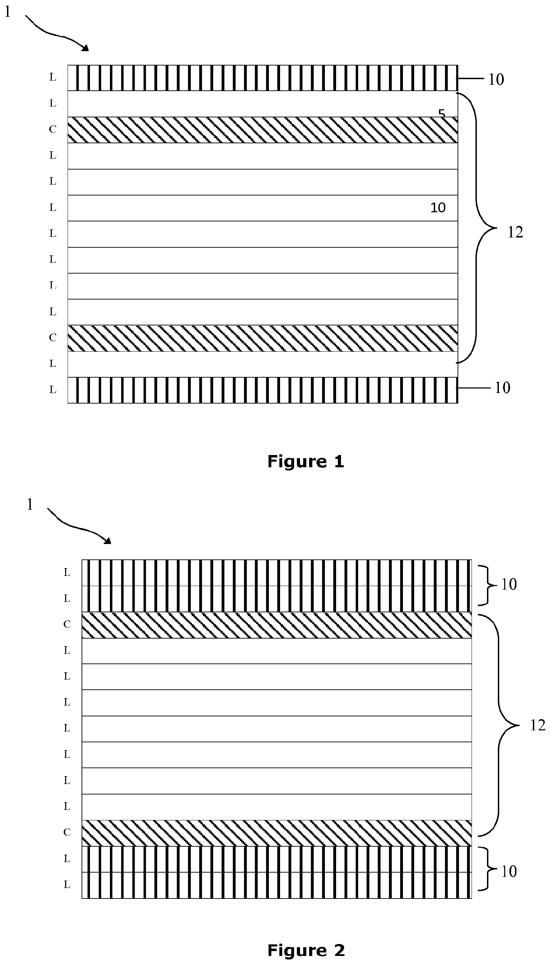

Referring to Figures 1 and 2 , a panel (1) of laminated veneer board for outdoor usage according the present invention comprises a plurality of veneers (10, 12). The veneers are made from a log by rotary peeling and have a tight face and a loose face. Other methods for preparing the veneers can be used.

The veneers (10, 12) further comprise more than one wood species which are selected from low density woods (12) and high density woods (10). The low density woods can be selected from plantation trees available in Southeast Asia, such as rubber, falcata, palm, and bamboo. The high density woods can be selected from natural forest trees, such as Bangkirai, Merbau, and Keruing.

A low density wood species is one that has a density of under 450kg/m³. A high density wood species is one that has a density over 650kg/m³.

The veneers are impregnated using low molecular weight phenol in a high pressure vacuum process. The veneers are put in an isolated chamber, preferably for less than 30 minutes at a pressure of 7 kg/cm² (686.5kPa). The required time for impregnation will depend on the thickness of the veneer. This process results in veneers filled with phenol and catalyzes the phenol inside the veneer's porosity. This process increases the density of the veneer, and also improves dimension stability and durability for outdoor usage.

The low molecular weight phenol used in this invention is a water-based phenol formaldehyde polymer with pH of below 12.0 and density of less than 2 g/cm³ at 30°C.

Optionally, during the impregnation process, the low molecular weight phenol can be added and/or modified with an additive or additives, which serve as anti-fungus, coloring, insect repellent, flow promoter, water repellent, and/or bulking agents. The additives can be premixed with the low molecular phenol before the impregnation step.

The impregnated veneer (10, 12) is dried using direct heating methodology. Grooved heated steel plates are used to dry the veneers by direct heating. The plates have parallel grooves with V, U and/or rectangular cross sectional. Preferably, the distance of the middle point of a groove to the middle point of the next groove ranges from 2mm to 12mm and the width and depth of the grooves range between 0.5mm to 2mm. Grooved plates as described in ID0020142 can be used.

This lay out and grooving on the steel plates used to dry the impregnated veneer enables water steam to vaporize out, provide temperature control, and specify the drying time, to provide a fast, and efficient drying process to achieve the desired moisture content.

Drying is preferably done at a temperature of below 100°C for less than 15 minutes. However the time and temperature can depend on the thickness of the veneer. The veneer is dried until a moisture content of 4% (v/w) is reached.

The dried veneer is joined to another veneer using an adhesive to form a multi-layer panel by hot pressing. Before going into the hot press, each impregnated veneer is bonded to one another using a phenolic adhesive on one side of the veneer and cold pressing. The cold pressing time is less than 30 minutes with pressure of less than 10 kg/cm² (980.7 kPa). This enables pre-bonding to happen between veneers. The multi-layer panel then goes into hot pressing via direct heating using hot platen to ensure sufficient bonding and to avoid delamination. The hot pressing time is preferably calculated as 1.5 minutes multiplied by the thickness (in mm) of the multi-layer panel, at a temperature of less than 150°C, with a pressure of less than 15 kg/cm² (1.471 MPa).

Adhesives used are liquid phenol formaldehyde resins (i.e., PF glue with a molecular formula of [C₇H₆O₂]ₙ wherein n is greater than 1.

The pre-bonding process also makes the pressing process easier, than if solely relying on self-bonding. In the case of self-bonding, where an adhesive is not added since impregnated resin is already inside the veneer, it can be difficult to continue to the next process of pressing since the veneer lay-ups could easily move during the pressing process.

As per the arrangement, the impregnated veneers are laid up in the order of a front face veneer, core veneers with long grain direction veneers and/or cross grain direction veneers, and a back veneer. This order ensures LVL and LVB are stable in dimension, cannot crack and/or warp.

By ensuring sufficient bonding strength between veneers and adding cross grain veneer into the composition, the stresses can be reduced significantly.

Since the panels of LVL and LVB of the present invention are subjected to the above impregnation process, a density of a solid wood product for outdoor usage (i.e., a density of 820kg/m³ according to ASTM D143-94 2000 (section 19) can be achieved. In addition, because of the impregnation process, the panels of the present invention are also able to have less shrinkage compared to a solid wood product for outdoor usage (i.e., 1.5% thickness shrinkage and 1.4% width shrinkage according to ASTM D143-94 2000 (section 20)).

As shown in Figure 1 in one specific embodiment, a panel (1) of LVB comprises a plurality of veneer layers of a high density wood (10) and a low density wood (12). The panel (1) includes several low density wood (12) veneer layers as the middle layers, one layer of high density wood (10) as the top of veneer layer and one layer of high density wood (10) as the bottom of veneer layer. The veneer layers of the panel (1) are laid up in a cross grain (C) or long grain (L) direction.

In the specific embodiment of Figure 1 , the panel (1) comprises a plurality of veneer layers in the long grain (L) direction. The top two veneer layers and the bottom two veneer layers are laid up in the long grain (L) direction, one veneer layer of cross grain (C) is laid up as the third layer from the top and one veneer layer of cross grain (C) is laid up as the third layer from the bottom of the panel (1). The middle layers are laid up in a long grain (L) direction. The veneer layer of cross grain (C) is selected from a low density wood.

As shown in Figure 2 in another specific embodiment, a panel (1) of LVB comprises a plurality of veneer layers of a high density wood (10) and a low density wood (12). The panel (1) includes a plurality of layers of low density wood (12) veneer layers as the middle layers, two layers of high density wood (10) as the top veneer layers and two layers of high density wood (10) as the bottom veneer layers. The wood grain direction of this embodiment is similar to the first embodiment. The top two veneer layers and the bottom two veneer layers are laid up in the long grain (L) direction, one veneer layer in the cross grain (C) direction is laid up as the third layer from the top and one veneer layer in the cross grain direction (C) is laid up as the third layer from the bottom of the panel (1). The middle layers are laid up in a long grain (L) direction.

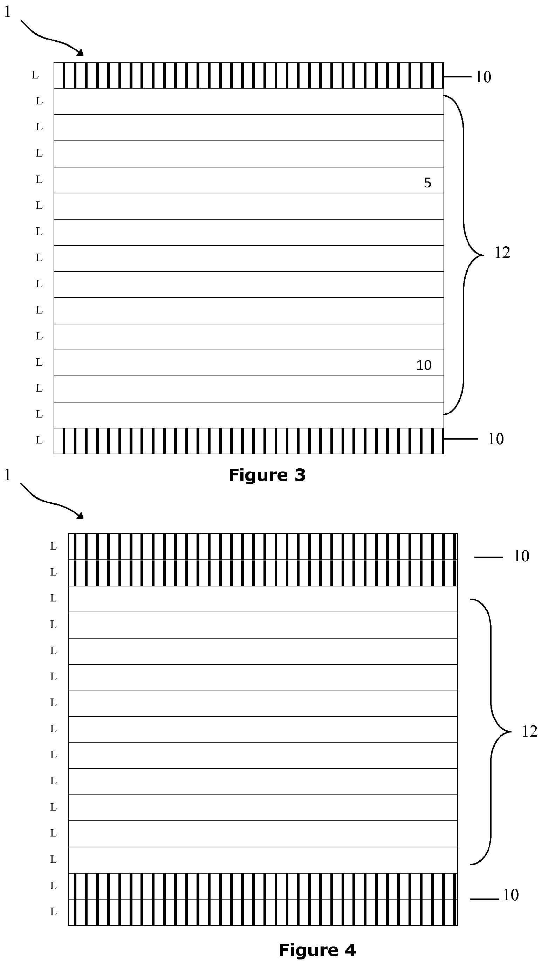

Referring to Figure 3 , in one specific embodiment, a panel (1) of LVL comprises a plurality of veneer layers of a high density wood (10) and a low density wood (12). The panel (1) includes several low density wood (12) veneer layers as the middle layers, one layer of high density wood (10) as the top of veneer layer and one layer of high density wood (10) as the bottom of veneer layer. The veneer layers of the panel (1) are laid up only in a long grain (L) direction.

Figure 4 is another specific embodiment, a panel (1) of LVL comprises a plurality of veneer layers of a high density wood (10) and a low density wood (12). The panel (1) includes a plurality of layers of low density wood (12) veneer layers as the middle layers, two layers of high density wood (10) as the top veneer layers and two layers of high density wood (10) as the bottom veneer layers. The veneer layers of the panel (1) are also laid up only in a long grain (L) direction.

The present invention is not limited to the above embodiments. For example, other numbers of layers can be used to form a panel of LVL and/or LVB. In particular additional layers of high density wood can be used to provide more than two high density wood layers in the panel. Different arrangements of cross and long grain directions can also be used in the panel.

## Claims

1. A method of producing a panel of laminated veneer lumber or laminated veneer board for outdoor usage, comprising:
providing a plurality of veneers of more than one wood species;
impregnating the veneers with a water-based phenol formaldehyde polymer with pH of below 12.0 and density of less than 2 g/cm³ at 30°C in a high vacuum;
drying the impregnated veneers using direct heating with a hot grooved steel platen;
joining the dried veneers together by providing a liquid phenol formaldehyde resin adhesive with a molecular formula of [C₇H₆O₂]ₙ wherein n is greater than 1 between adjacent veneers and hot pressing the veneers, to form a multiple layer panel.

2. The method as defined in claim 1 further comprising mixing the water-based phenol formaldehyde polymer with a combined anti fungus and insect repellant before impregnating the veneers.

3. The method as defined in claims 1 and 2 wherein drying the impregnated veneer occurs at a temperature below 100°C, until a moisture content of 4% (v/w) is reached.

4. The method as defined in any preceding claim, wherein the wood species are selected from low density and high density woods.

5. The method as defined in claim 4, wherein the low density wood is selected from rubber, falcata, palm, and bamboo, and the high density wood is selected from Bangkirai, Merbau, and Keruing.

## Patentansprüche

1. Verfahren zum Herstellen eines laminierten Furnierschichtholzes oder einer laminierten Furnierplatte für Außengebrauch, umfassend:
Bereitstellen einer Vielzahl von Furnieren aus mehr als einer Holzart;
Imprägnieren der Furniere mit einem wasserbasierten Phenolformaldehydpolymer mit einem pH von unter 12,0 und einer Dichte von weniger als 2 g/cm³ bei 30°C in einem hohen Vakuum; Trocknen der imprägnierten Furniere unter Verwendung von direkter Erwärmung mit einer heißen gerillten Stahlträgerplatte;
Zusammenfügen der getrockneten Furniere durch Bereitstellen eines flüssigen Phenolformaldehydharzklebers mit einer molekularen Formel von [C₇H₆O₂]ₙ, wobei n größer als 1 ist, zwischen angrenzenden Furnieren und Heißpressen der Furniere, um eine mehrlagige Platte zu bilden.

2. Verfahren nach Anspruch 1, das ferner das Vermengen des wasserbasierten Phenolformaldehydpolymers mit einem kombinierten Antipilz- und Insektenschutzmittel vor dem Imprägnieren der Furniere umfasst.

3. Verfahren nach Anspruch 1 und 2, wobei das Trocknen des imprägnierten Furniers bei einer Temperatur unter 100 °C stattfindet, bis ein Feuchtigkeitsgehalt von 4 % (v/w) erreicht ist.

4. Verfahren nach einem vorhergehenden Anspruch, wobei die Holzarten aus niedrigdichten und hochdichten Hölzern ausgewählt sind.

5. Verfahren nach Anspruch 4, wobei das niedrigdichte Holz aus Kautschuk, Falcata, Palme und Bambus ausgewählt ist und das hochdichte Holz aus Bangkirai, Merbau und Keruing ausgewählt ist.

## Revendications

1. Méthode de production d'un panneau de lamibois ou de contreplaqué stratifié pour applications en extérieur, comprenant
l'utilisation d'une pluralité de contreplaqués d'une ou plusieurs espèces de bois ;
l'imprégnation des contreplaqués avec un polymère de phénol-formaldéhyde à base d'eau, avec un pH inférieur à 12,0 et une densité inférieure à 2 g/cm³ à 30°C sous vide poussé ;
le séchage des contreplaqués imprégnés en utilisant un chauffage direct avec une platine d'acier cannelée chaude ;
l'assemblage l'un à l'autre des contreplaqués séchés en utilisant un adhésif à résine de phénol-formaldéhyde liquide dont la formule moléculaire est [C₇H₆O₂]ₙ, n étant supérieur à 1 entre contreplaqués adjacents, et le pressage à chaud des contreplaqués, pour former un panneau multicouches.

2. Méthode définie selon la revendication 1, comprenant en outre le mélange du polymère de phénol-formaldéhyde à base d'eau avec un combiné antifongique et insectifuge préalablement à l'imprégnation des contreplaqués.

3. Méthode définie selon les revendications 1 et 2, le séchage du contreplaqué imprégné survenant à une température inférieure à 100°C, jusqu'à ce que l'on atteigne une teneur d'humidité de 4% (v/p).

4. Méthode définie selon une quelconque des revendications précédentes, les espèces de bois étant sélectionnées parmi des bois à faible densité et à haute densité.

5. Méthode définie selon la revendication 4, le bois à faible densité étant sélectionné parmi l'hévéa, le falcata, le palmier et le bambou, et le bois à haute densité étant sélectionné parmi le bangkirai, le merbau, et le Keruing.
